# EUROPEAN PATENT APPLICATION

(11) **EP 2 770 274 A2**
(43) Date of publication of application: **27.08.2014**
(21) Application number: 14445003.8
(22) Date of filing: 20.02.2014
(51) Int. Cl.: F24J 2/52

(54) **Stand for solar panels**

(30) Priority: 24.02.2013 SE 1300144
(71) Applicant: Carlsen, Lennart, 590 21 Väderstad (SE)
(72) Inventor: Carlsen, Lennart, 590 21 Väderstad (SE)
(74) Representative: Berglund, Erik Wilhelm

(57) **Abstract**

Stand for solar panels (11) which solar panels are provided with a surrounding frame (10) that includes a flange (24) that is essentially parallel with the plane of the panel and with holes (29) in two opposed frame parts. The standing includes two or several support profiles (9) for supporting one or several panels, at which at least one of the support profiles is provided with points (25) that can grip into the holes in the panel frame. The stand includes washers (18) that at two or several points can be secured with screws to the support profiles and extend in over the flange (24) of the frame of the solar panel. (Fig. 9.)

## Description

Most solar panels for use in a larger scale, for instance solar panel parks, includes a rectangular thin glass pane that on the downwards facing side is provided with a light radiation to electricity transforming layer. Around the glass pane extends a U-shaped aluminum profile with the opening facing inward. The glass pane is glued to the bottom side of the upper flange of the U-shaped profile. In the lower flange of the long sides of the panels that normally are those that are inclined there are holes for fastening with screws to support structures below. In some case there are even in the same places holes in the upper flanges in order to allow a securing by screws from the front side of the panel.

Due to cost, and handling reasons the panels are made light with thin material in the aluminum profile as in the glass pane. If the fastening is with bolts that goes through both flanges of the U-profile the profile as well as the glass pane can be damaged. Furthermore one has to lean far in above the panel in order to fastened the upper bolts. If the bolts only are to run through the lower flange it will instead become cumbersome. In other words the mounting is expensive cumbersome and with great risks for the panels. And there is thus a need for arrangements reducing the above problems.

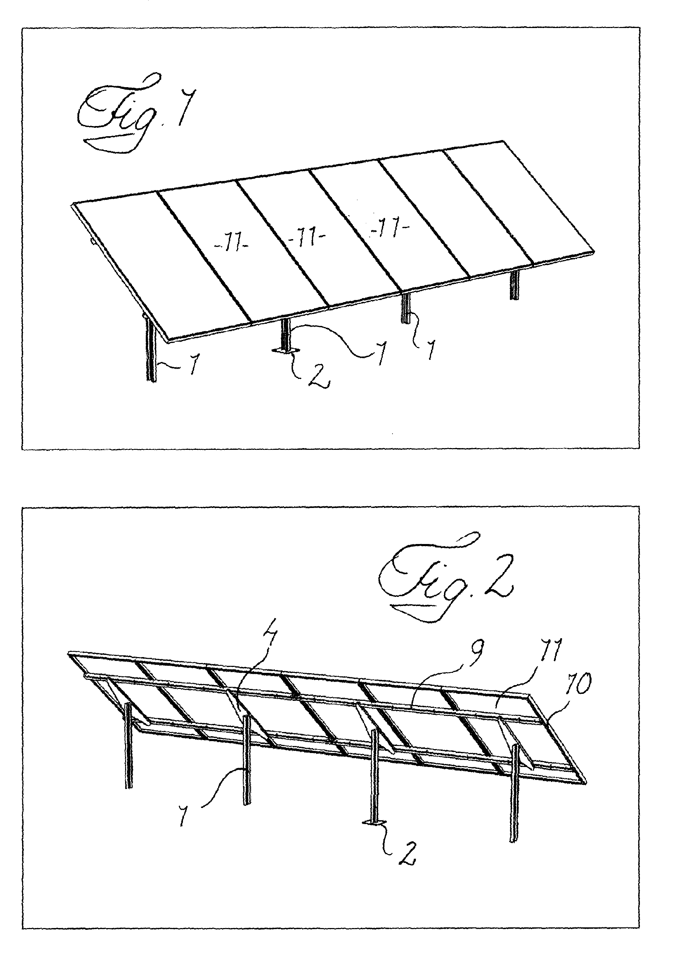

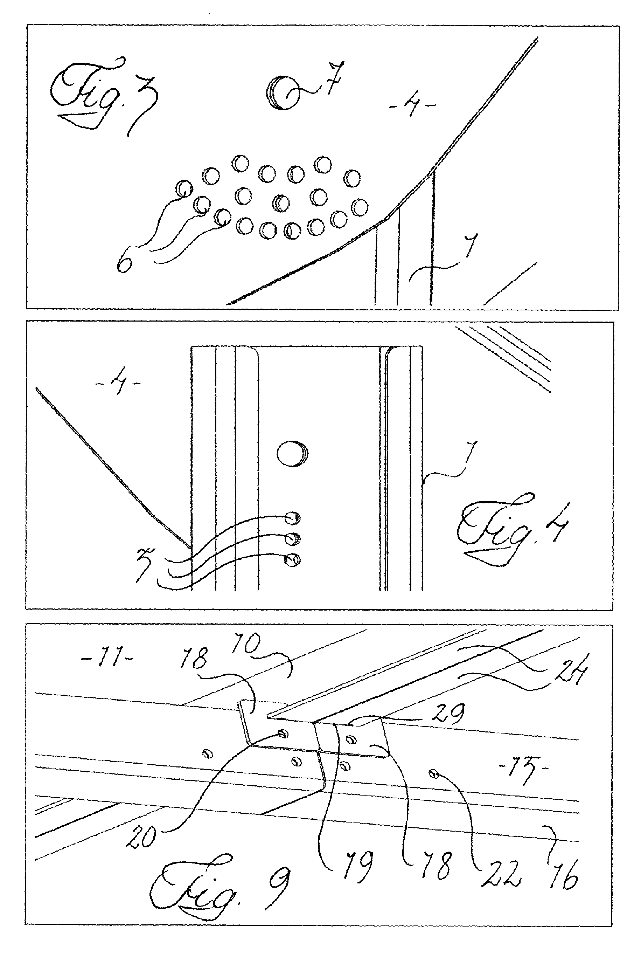

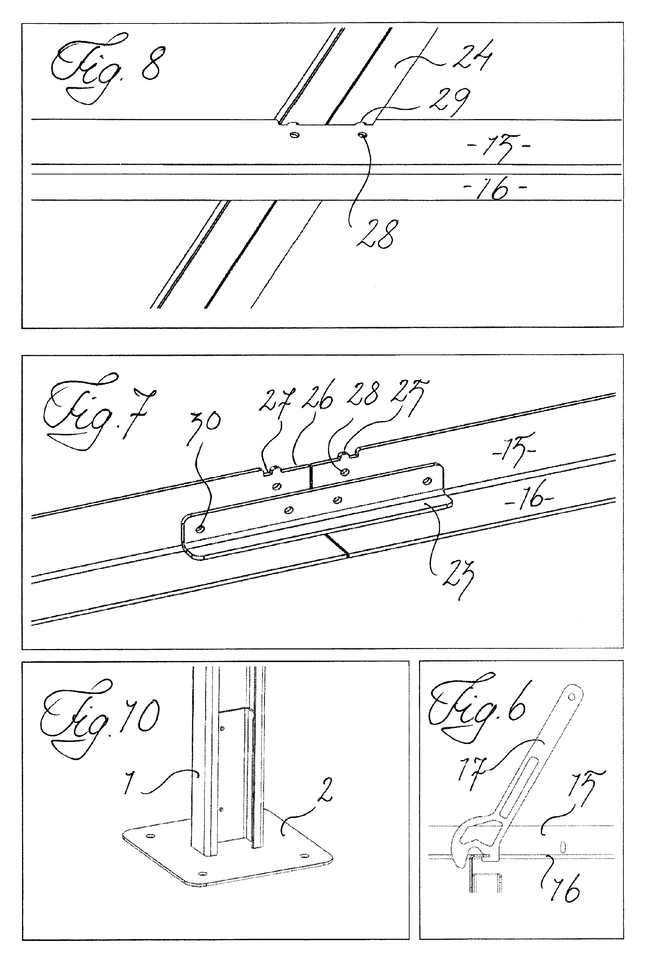

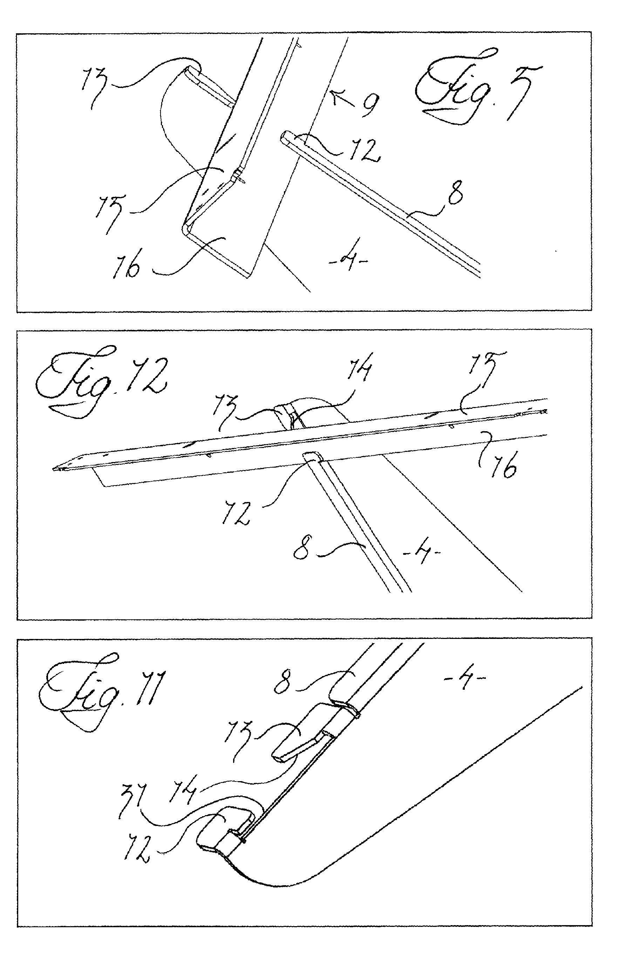

The present invention has as its object a more simple, safer stand and with a lower cost as well as mounting for solar panels. This object is solved in accordance with claim 1. Advantageous further developments of the inventive thought are apparent from the subclaims as well as the following descriptions of an embodiment of the invention in connection with included drawings. In the drawings fig. 1 depicts a panel module in accordance with the invention, fig. 2 a stand in accordance with the invention for the module in fig. 1, fig. 3 and 4 the connection of the poles with the profile holders, fig. 5 and 6 how the profile holders are connected with the elongate panel supporting support profiles, fig. 7 how the support profiles can be joined, fig. 8 and fig. 9 how the solar panel is fixed on a support profile, fig. 10 how a pole or stake can be fastened to a hard ground with a pole foot, fig. 11 an additional view of a profile holder and fig. 12 an additional view of a profile holder and a support profile.

At the mounting of a stand in accordance with the invention a number of poles 1 with C-shaped cross section are pushed down into the ground in a row. When the ground is hard for instance rock instead a shorter pole can be used together with a foot 2 that is bolted to the ground (fig. 10).

The pole has in its upper end a bolt hole 3 for the mounting of a profile holder 4 by means of a bolt that also extends through hole 7 in the profile holder 4. At the pushing down of the pool the pole is placed so that the profile holder when it is mounted become essentially perpendicular to the length direction of the stand. The profile holder can be pivoted around the bolt so that the inclination can be adapted to the geographic latitude for the installation so that the sun radiation can be maximally used. For the locking of the inclination the profile holder has three rows of adjustment holes 6 along part circles with the hole 7 as center and placed obliquely below the hole 7. The pole has three locking holes 5 straight under the bolt hole 3 with a mutual distance that coincide with the radial distance between the rows of holes in the profile holder. The adjustment holes 6 has a diameter corresponding to the outer diameter of a locking screw that is self-tapping while the fixing hole 5 in the pole has a slightly smaller diameter so that the self-tapping screw can be threaded into one of these. The screw is for locking put into the adjustment hole 5 that corresponds to the intended inclination, is turned to coincidence with appropriate locking hole in the pole and it is threaded in and tightened, whereafter also the bolt is tightened. In the shown case angles between 0-86 degrees can be locked in steps of five degrees before the bolt is tightened.

The profile holders will essentially be directed perpendicularly to the the length direction of the stand. The profile holders has on the top a perpendicularly folded longitudinal flange 8. The vertical part of the profile holder 4 is in the middle deeper then to become more narrow towards the ends. In the outer ends the profile holders support longitudinal angled profiles of sheet metal that constitutes support profiles 9 for the solar panels 11.

The profile holders 4 have in both ends a short distance inside the ends directly below the laterally protruding lengthwise flange a slot 19 that is somewhat longer than the lower flange 16 of the support profile 9 is wide. The distance between the lower ends of the slots coincide with the distance between fixing holes 29 in the lower frame flanges 24 of the panels. The lateral flange 8 of the profile holder is above the slot, in the end that is at the most low one when the profile holder is mounted and inclined, cut at a distance corresponding to half the width of the metal sheet profile from the lower end of the slot so that a gripping lug 12 is formed. Furthermore the flange 8 on the profile holder is cut or slotted at such a distance from the lower slot ends of the profile holder corresponding to the width of the support profile so that there is an interruption in the lateral profile 8 corresponding to a little more than half the width of the metal sheet profile. A short distance above the interruption in the lateral profile in the lower end of the profile holder the lateral profile is once again cut and slotted so that a laterally protruding locking lug 13 is formed. In the upper end of the profile holder the locking lug 13 is constituted of the distance from the upper edge of the flange interruption and the upper end of the profile holder. The slots 19 extends a short distance up below the knocking lugs 13.

The sheet metal profile is mounted by its lower flange being inserted below the remaining gripping lugs 12 over the slots and to contact with the lower ends of the slots and the upper end of the support profile edge is pivoted down inside the upper cut edge of the recess in the lateral flange of the profile holder. Hereafter the locking lugs 13 are bent up with the tool 17 (fig. 6) so that the support profiles are held in the mounting position. The tool is shaped so that the degree of possible upending is limited but the bending up can also be carried out with a spanner.

The locking lugs 13 have a chamfering 14 in the corner facing the support profile and the slot so that the locking lug will be in contact with the upper flange 15 of the support profile a distance up on this.

The position is not critical lengthwise for the metal sheet profiles, which means that when needed many profile holders be used and that the distance between the poles is not critical but the number of poles and profile holders can be chosen after expected strains.

The upwards going flange 16 of the angled profiles are in the upper edge provided with recesses 26, 27 with a distance corresponding to the width of the lower flange 24 of the panel frames 10, but for a left protruding point 25 that can grip into holes 26 in these flanges 24. The metal sheet profiles are in the shown case three times as many as long as the width of the panels so that three panels abreast can be placed on each metal sheet profile. The recesses in the ends of the metal sheet profiles have a length slightly larger than the width of the panel frame 10 and a protruding point 25 while corresponding recesses for the two positions further in of the profiles were the panels are in contact with each other have the double length and has two points 25 for the holes in the frame flanges 24. The panels can thus simply be placed on the metal sheet profiles and be pushed upwards or downwards until the points grip into the frame holes 29, fixing the panels in their surface plane.

In order also to lock the panels against lifting in the crossing for each support profile and panel frame washers 18 are applied, provided with slots 19, and that can be pushed in over the lower flange 20 of the panel frame, thereafter to be locked by a self-tapping screw being inserted into a hole 20 in the washer then to be threaded fast in the support profile in slightly smaller hole 28, that coincides with that in the washer when it is fully inserted and grips over the lower flange of the panel frame.

As is shown in fig. 1 and 7 by joining of the support profiles stands with desired length can be achieved. Joining can be done with short and narrow joining angles 23 that are sufficiently narrow not prevent the mounting of the slot provided washers at the joints. The joining angles as well as the ends of the support profiles are provided with prestamped holes 30 and 22 respectively for connection with self-taping screws.

Since the stand is fabricated of metal sheet it will automatically become both elastic and plastic, so that the stand can handle an adaption between the panels and with the exact measurements of these and the poles pushed down into the ground even if the latter are perhaps not always exactly placed. Furthermore the lengthwise extending metal sheet profiles are displaceable lengthwise in the profile holders so that the points that are to grip into the frame holes of the panels can do so even if the angles of the profile holders vary.

In order to adjust the two support profiles one can for instance place a first panel in the upper holes and then knock the lower angle profile lengthwise to coincidence for the points on the lower flange with a lower holes in the frame of the panel. Thereafter the remaining panels can easily be lifted on controlled by the first one. Instead of using the first panel for the adjustment of the lengthwise running profiles in relation to the profile holders one can use an angle template. Since the points on the support profiles has a certain play in relation to the frame holes of the panels further deviations can be compensated for.

The points are rounded in their upper end in order to facilitate the insertion of these into the holes in the panel frame.

By means of cable ties the electric leads to and from the solar panels can be fastened on the support profiles, advantageously below the upper one so that they get well protected.

In the shown case only two longitudinal metal sheet profiles are arranged, but they may of course be more if you arrange more mounting places for this in the profile holders and mounting holes respectively in the upper flanges of the panel frames.

The invented stand is simple to mount and the mounting takes about a fifth of the time compared to stands that are used today. By starting from metal sheet material, for instance galvanized iron, steel or stainless steel that also can be coated with for instance powder coating the costs are kept down since the raw material will be low cost as well as the number of working steps will be small and the fabrication of the parts can to a great extent be automatized, separated into cutting, stamping, bending and surface treatment. The number of different parts is small and they can be tightly packed.

The use of metal sheet parts also result in the stand becoming in itself relatively flexible, for instance for adaption to the ground at the same time as it easy to mount the panels. The panels are in themselves surprisingly flexible as to twisting.

An essential advantages with the invented stand is the precision for the width between the panel holes is taken care of by the support profiles and the distance heightwise is controlled by the brackets for the support profiles in the profile holders so that the only adjustment that could be necessary is the initial angling that essentially takes care of its self if only the panel you start with has a support panel below that is perpendicular to the support panels. It can also be noted that the mounting can simply be done also for one person alone. The number of manual grips is low and it should consequently be fast and simple to learn available personnel on place to take care of the mounting work.

Since the stand is flexible the risk that tensions damage the panels is reduced.

It should also be mentioned that also when stand and panels have been mounted you can from the rear side check and complete if something had been forgotten. This also means that at possibly damaged panels it is easy to exchange these as well possibly damaged parts of the stand.

### Reference numerals

1. pole
2. pole foot
3. bolt hole in pole
4. profile holder
5. fixing hole (in the pole)
6. adjustment hole (in the profile holder)
7. bolt holes in the profile holder
8. longitudinal flange on the profile holder
9. support profile
10. panel frame
11. solar panel
12. gripping lug
13. locking lug
14. chamfering
15. upper flange on support profile
16. lower flange on support profile
17. tool
18. washer with slot
19. slot in washer
20. hole in washer
21. hole in support flange for the washer screw
22. hole in support profile for joining angle
23. joining angle
24. lower flange of panel frame
25. point
26. recess in support profile
27. recess in support profile
28. screw hole in support frame for washer screw
29. hole in low flange in the panel frame
30. hole in joining angle
31. slot in support profile

## Claims

1. Stand for solar panels which solar panels are provided with a surrounding frame that includes a flange that is essentially parallel with the plane of the panel and with holes in two opposed frame parts, **characterized in that** the stand includes two or several support profiles for the support of one or several panels, at least one of the support profiles being provided with points or protrusions that can grip into the holes of the panel frame.

2. Stand according to claim 1, **characterized in that** it includes washers that at two or several protrusions are boltable to the support profiles and extends in over the flange of the solar panel frame.

3. Stand according to claim 2, **characterized in that** the washers include a slot and can be displaced so that the slot grips the flange of the panel frame and that the washer includes a hole or several for securing by a screw or several to the support profile, that is provided with corresponding holes.

4. Stand according to claim 1, **characterized in that** the support profile comprise a metal sheet angle with an upper flange facing the plane of the panel and against the outer edge of which the panel frame is in contact and the protrusions of the support profile are constituted by recesses on each side of this so that the panel frame at the location of the hole can be lowered down so that the frame rest against the bottom of the recesses.

5. Stand according to claim, **characterized in that** the support profiles extend in the length direction of the stand for support of several panels.

6. Stand according to claim 1, **characterized in that** the support profiles are angled profiles that with a lower flange rest on transverse profile supports that in their upper edge has a lengthwise folded out edge flange and that at the location for transverse support profiles and below the folded out edge flange has a slot with a length corresponding to the width of the lower flange of the support profile and a height slightly larger than this, furthermore the edge flange is removed above the slot but for distance in one end of the slot, below which the outer edge of the lower flange of the support profile can be inserted at mounting.

7. Stand according to claim 6, **characterized in that** the lower flange is facing downwards.

8. Stand according to claim 6, **characterized in that** the end of the slot that is opposed to that were the edge flange protrude in over the slot the edge flange constitute a flap that after the insertion of the lower flange of the support profile in the slot can be folded up to prevent the horizontal metal sheet profile to be pivoted up and drawn out of the slot.

9. Stand according to any of the claims 2 - 8, **characterized in that** the profile support is fastened by a bolt to a pole or post of metal sheet material and that the profiles support and the pole respectively has a number of holes with the same distance to the bolt so that the profile support can be locked in more or less inclined positions by a screw being tightened through the inclination corresponding coinciding holes.
